# EUROPEAN PATENT APPLICATION

(11) **EP 3 051 497 A1**
(43) Date of publication of application: **03.08.2016**
(21) Application number: 15748712.5
(22) Date of filing: 02.02.2015
(51) Int. Cl.: G06T 17/05, G06T 15/04, G09B 29/00

(54) **THREE-DIMENSIONAL MAP DISPLAY SYSTEM**

(30) Priority: 13.02.2014 JP 2014025109
(71) Applicant: Geo Technical Laboratory Co., Ltd., Fukuoka-shi, Fukuoka 812-0013 (JP)
(72) Inventor: ARAMAKI Masatoshi, Fukuoka-shi Fukuoka 812-0013 (JP); KISHIKAWA Kiyonari, Fukuoka-shi Fukuoka 812-0013 (JP); TESHIMA Eiji, Fukuoka-shi Fukuoka 812-0013 (JP); UCHINOUMI Masashi, Fukuoka-shi Fukuoka 812-0013 (JP); NAKAGAMI Masaru, Fukuoka-shi Fukuoka 812-0013 (JP); AZAKAMI Tatsuya, Fukuoka-shi Fukuoka 812-0013 (JP); YONEKURA Tatsurou, Fukuoka-shi Fukuoka 812-0013 (JP)
(74) Representative: Eder Schieschke & Partner mbB
(86) International application number: PCT/JP2015/052846
(87) International publication number: WO 2015/122302

(57) **Abstract**

[Object]

To enable representation of undulation with a light processing load by using three-dimensional ground surface data.

[Solution]

Ground surface data representing a three-dimensional shape of a ground surface is stored in a map database. In addition, a two-dimensional image (an image in the figure on the middle stage of Fig. 1) representing contrast of the ground surface is generated by projecting the ground surface data by applying lighting thereto, and the two-dimensional image is stored in map data as a ground surface texture. In displaying the map, the ground surface texture is pasted on the ground surface data and perspective projection is performed (an image in the figure on the lower stage of Fig. 1). By such a configuration, even without applying lighting, a map can be provided which can give undulation of a ground surface with a light processing load.

## Description

### [Technical Field]

The present invention relates to a 3D map display system for displaying a 3D map representing undulation of a ground surface.

### [Background Art]

In electronic maps used in a navigation apparatus, a computer screen or the like, a 3D map representing ground features such as a building three-dimensionally is used in some cases. The 3D map is usually represented by three-dimensionally drawing a 3D model by perspective projection or the like. In the 3D map, since a ground surface is also prepared by three-dimensional polygons, undulation, that is, an uneven state of the ground surface can also be represented by them. Patent Literature 1 discloses a method of drawing the ground surface three-dimensionally.

### [Citation List]

### [Patent Literature]

Patent Literature 1: Japanese Patent Laid-Open No. 10-207351

### [Summary of Invention]

### [Problem to be Solved by Invention]

In the 3D map, in order to represent a three-dimensional feeling, use of the 3D model is not enough but lighting needs to be applied to the 3D model by setting a light source in a three-dimensional virtual space so as to represent contrast. In general, since lighting processing has a large calculation load, if lighting is applied even to the ground surface, the number of polygons becomes considerable, and there is a problem that the calculation load becomes extremely large.

The present invention was made in view of such a problem and has an object to enable representation of undulation with a light processing load by using three-dimensional ground surface data.

### [Means for Solving the Problem]

The present invention is
a 3D map display system for displaying a 3D map and can be configured as a 3D map display system, comprising:
a map database for storing ground surface data representing a three-dimensional shape of a ground surface and a ground surface texture generated on the basis of a projection view in which predetermined lighting is applied to the ground surface data; and
a display control unit for displaying the 3D map by projection by applying the ground surface texture to the ground surface data.

The texture of the present invention is generated on the basis of the projection view in which lighting is applied in advance and thus, contrast generated on the ground surface by the lighting is reflected. In the present invention, since the ground surface is projected by applying this ground surface texture, in displaying the map, a three-dimensional feeling of the ground surface can be represented even without applying lighting, and the 3D map can be displayed with a light processing load.

In the present invention, generation of the ground surface texture can be performed by various kinds of setting. For example, the lighting may be applied from right above or may be applied diagonally. Projection when the ground surface texture is generated may use various methods of perspective projection, parallel projection and the like, but from a point of sight of generation of a ground surface texture without distortion, parallel projection from right above, that is, a projection method when a 2D map is displayed is preferably used.

The projection in displaying the map does not have to be the same projection method when the ground surface texture is generated. For example, it may be so configured that the ground surface texture is generated by parallel projection from right above and the map is displayed by perspective projection from a diagonal direction.

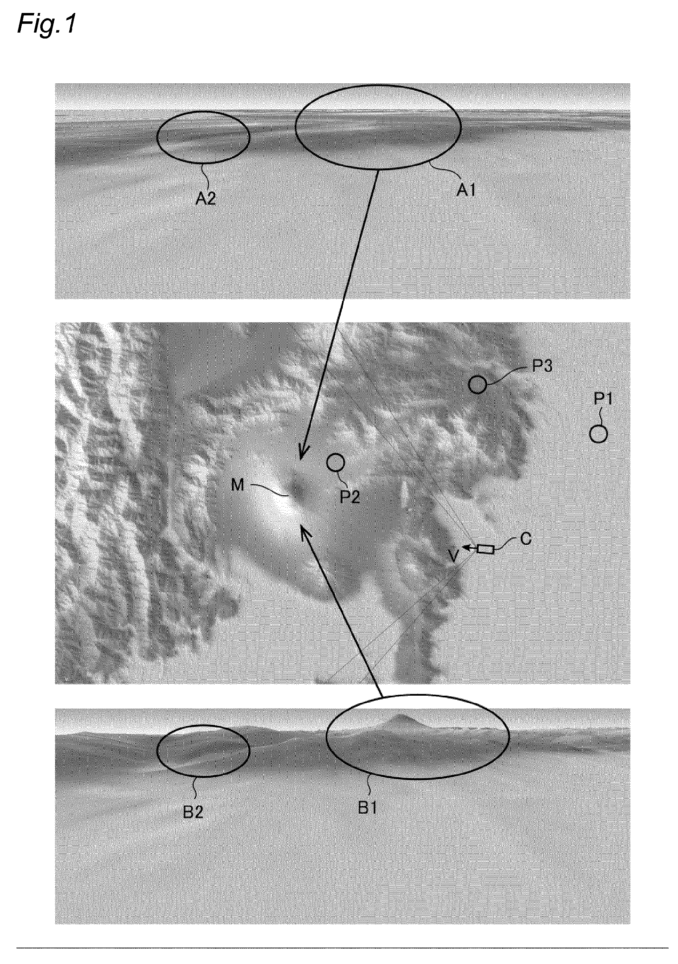

Fig. 1 is an explanatory view illustrating a ground surface texture and its application example. A region around a mountain M is illustrated as an example. On a middle stage of the figure, a ground surface texture projected by applying lighting to the ground surface around the mountain M is illustrated. A texture in which contrast according to undulation on the ground surface is represented by lighting is realized. The ground surface texture is a 2D image generated as above.

On a lower stage in the figure, a projection view drawn by pasting the aforementioned ground surface texture on the ground surface data and applying perspective projection is illustrated. A projection direction is a direction of the line of sight V when seen from a camera C illustrated in the figure on the middle stage. Lighting is not applied. Since contrast is given to the ground surface texture, a projection view which can give a three-dimensional feeling to the undulation on the ground surface as this can be obtained even without lighting. Since the ground surface data is projected, a shape of the mountain M is represented in a region B1.

On the upper stage in the figure, instead of using the ground surface data, a projection view obtained by pasting the ground surface texture on a mere flat surface and applying perspective projection is illustrated. The projection direction is the direction of the line of sight V illustrated in the figure on the middle stage, and lighting is not applied. Contrast according to the ground surface texture shows, but only pasting on the flat surface cannot realize the three-dimensional feeling as illustrated on the figure on the lower stage. Moreover, though the mountain M is present in a region A1, since it is a flat surface, its shape is not reproduced. If only the ground surface texture is used, the view would not give a feeling of even presence of the mountain M. Whether the three-dimensional feeling can be given or not depends not only presence of the mountain M. By comparing a region A2 on the upper stage and a region B2 on the lower stage, it is known that presence of the three-dimensional feeling of the ground surface is different even in a region other than the mountain M.

As described above, in the present invention, by applying the ground surface data representing a three-dimensional shape of the ground surface and the ground surface texture in combination, a projection view which can give a sufficient three-dimensional feeling can be reproduced even without applying lighting.

Fig. 1 illustrates only an example, and this does not mean that application of the present invention is limited to such mountainous regions as the mountain M. Moreover, the lower stage of Fig. 1 illustrates an example of drawing without applying lighting, but lighting can be further applied.

In the 3D map display system of the present invention, the ground surface texture may be generated on the basis of a projection view in which predetermined coloring is given to the ground surface in accordance with its altitude value.

By such a configuration, in addition to a three-dimensional feeling of the ground surface, an altitude of the ground surface can be intuitively grasped by color. The coloring can be set arbitrarily. For example, such an aspect can be considered that coloring is applied so that dark green changes to light green as the altitude becomes higher, and brown color is given to a region with a higher altitude.

In the example in Fig. 1 illustrated above, different coloring can be given to regions such as points P1, P3, P2, a mountain top M and the like. By configured as above, the altitude can be recognized easily in accordance with colors.

When the 3D map is to be displayed, in order to reduce a load of projecting processing, there can be a method of preparing image data drawing a distant view in advance and projecting the distant view stood on the ground surface. By such a configuration, a range for projecting the ground surface can be narrowed into a predetermined distance range from a point of sight, and a load of the projection processing can be reduced. In the present invention, too, such method can be naturally applied.

However, in the 3D map display system of the present invention,
the display control unit may display a distant view by projection of the ground surface data without standing a polygon to which a background image drawing the distant view including the ground surface is pasted on the ground surface.

In the present invention, since lighting is made no longer necessary by using the ground surface texture, a processing load in displaying the map can be reduced. Therefore, without preparing the distant view as described above, the distant view can be drawn by projection of the ground surface. By employing this method, there is no need to prepare image data of the distant view in advance, no such trouble that the distant view does not change even if the point of sight or the direction of the line of sight changes does not occur, and a natural seamless image from a near view to the distant view can be drawn.

In the 3D map display system of the present invention,
the display control unit may lower resolution of the ground surface texture more in a region far from the point of sight of the projection than a region close thereto.

By such a configuration, the load required for drawing the distant view can be further reduced.

Moreover, simultaneously, a structure of the ground surface data may be made rogher in the region far from the point of sight than in the close region. For example, a method of changing an interval of a lattice can be employed that in a region close to the point of sight, the ground surface data giving an altitude in a lattice with a 50-meter interval is used while in a far region, a lattice with a 100-meter interval is used.

Here, the region close to the point of sight and the region far from that can be set arbitrarily. The resolution or the like may be continuously changed in accordance with a distance from the point of sight when the map is drawn, or the region may be divided into a plurality of regions in accordance with a distance from the point of sight and resolution or the like may be changed in steps in each region.

In the 3D map display system of the present invention,
the map database further may store a 3D model representing a 3D shape of a feature and a texture representing an appearance of the feature to which predetermined lighting is applied in advance; and
the display control unit may further perform the projection by applying the texture to the 3D model.

By such a configuration, the feature, that is, the 3D model of a building or the like does not need lighting any longer, either, and the processing load can be further reduced.

Lighting for the texture to be applied to the ground surface and for the texture representing the appearance of the 3D model may preferably share the same condition. By such a configuration, map display without a sense of discomfort as a whole can be realized.

In the present invention, it is not necessary to include all the aforementioned various characteristics but a part of them may be omitted or combined in configuration as appropriate.

The present invention may be configured as a 3D map display method of displaying a 3D map by a computer or a computer program for performing such display by a computer. Moreover, it may be configured as a CD-R, a DVD and a computer-readable recording medium recording such computer program.

### [Brief Description of the Drawings]

[Fig. 1] Fig. 1 is an explanatory view illustrating a ground surface texture and its application example.
[Fig. 2] Fig. 2 is an explanatory view illustrating configuration of a 3D map display system.
[Fig. 3] Fig. 3 is an explanatory view illustrating a cell structure of a map database.
[Fig. 4] Fig. 4 is an explanatory view illustrating a data structure of the map database.
[Fig. 5] Fig. 5 is a flowchart of ground surface texture generation processing.
[Fig. 6] Fig. 6 is a flowchart (1) of map display processing.
[Fig. 7] Fig. 7 is a flowchart (2) of the map display processing.
[Fig. 8] Fig. 8 is an explanatory view illustrating an effect of depth buffer clear.
[Fig. 9] Fig. 9 is an explanatory view illustrating a display example of a 3D map.

### [Description of Embodiments]

### [Embodiment 1]

Regarding the present invention, an embodiment configured as a 3D map display system for displaying a 3D map on a display by using a personal computer will be described. The present invention can be also applied in an aspect to be incorporated as 3D map display functions of other apparatuses such as a route search/route guidance apparatus and the like.

### A. System configuration:

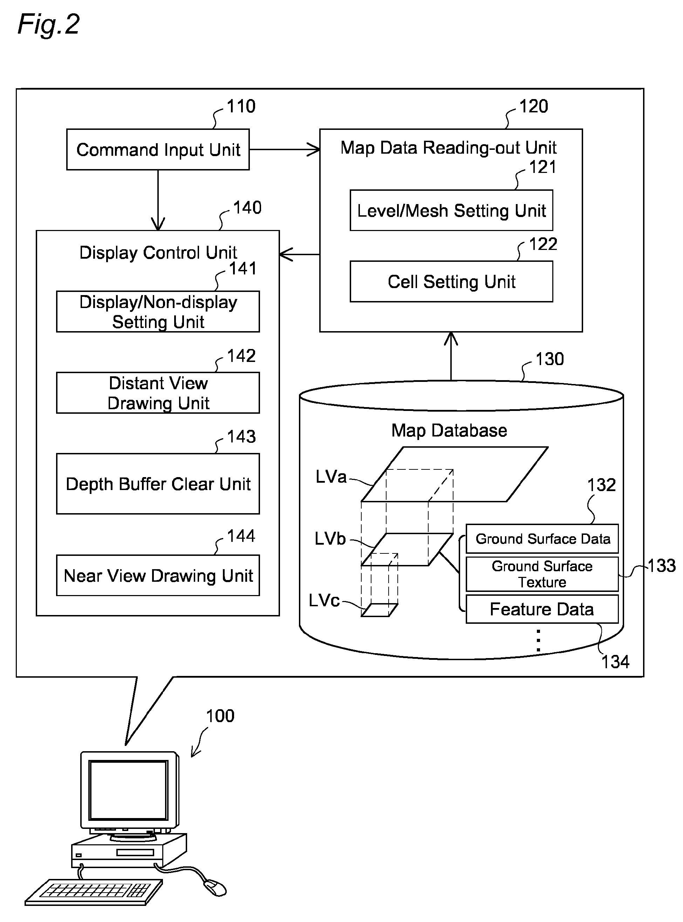

Fig. 2 is an explanatory view illustrating configuration of a 3D map display system 100. The 3D map display system is configured by using a personal computer and is a system for displaying a 3D map on the display in accordance with an instruction from a user.

In this embodiment, a standalone system using the personal computer is exemplified, but it may be configured as a system in which a map database 130 and the like are stored in a server, and the server and the personal computer are connected via a network. As a terminal for displaying the map, not only the personal computer but also various terminals such as a tablet terminal, a mobile phone, a smart phone and the like can be used.

The 3D map display system has various illustrated functional blocks. These functional blocks can be configured by installing software realizing the respective functions but a part of or the whole of them may be configured in a hardware manner.

The map database 130 stores map data including a 3D model and the like representing a three-dimensional shape and the like of a feature for displaying the 3D map. In this embodiment, the map data is stored in plural levels LVa to LVc as illustrated in the figure. Each of them is managed by being divided into predetermined sizes of meshes. The level LVc stores the data with the highest level of detail, that is, data such as narrow roads and small features. The level LVc inevitably has a larger data capacity, and it is divided into relatively small meshes and managed. The level LVb has a level of detail slightly lower than that of the level LVc. At the level LVb, data such as narrow roads and the like is omitted, and data such as standard roads, buildings and the like is stored. The mesh size of the level LVb is set larger than that of the level LVc. The level LVa is data with further lower level of detail. The data is narrowed to major roads such as highways and major buildings such as landmarks and stored. The mesh size of the level LVa is set to a further larger size than that of the level LVb.

The data at each level is configured by ground surface data 132, a ground surface texture 133, feature data 134 and the like. The ground surface data 132 is data representing a three-dimensional shape of the ground surface and is data obtained by dividing the ground surface into rectangular regions of 50 meters or the like and storing an altitude value for each region. The ground surface texture 133 is a two-dimensional image generated by cutting out a projection view generated by projection from right above with lighting being applied to the ground surface data. That is a texture image representing contrast of the ground surface. The feature data 134 stores 3D models representing three-dimensional shapes of features such as a building and textures given to the features.

The map data is stored by being divided into the levels as above, but the feature data is not stored selectively in any of these levels. For example, the major building such as a landmark is stored in common to all the levels of the levels LVa to LVc. That is, the data at each level is capable of displaying the map with the level of detail according to the level whichever level is used.

In this embodiment, the map data is managed by a cell obtained by further segmenting the mesh. A structure of this cell will be described later.

A command input unit 110 receives an instruction from a user in relation to the 3D map display. For example, instructions such as a position of the point of sight, a direction of the line of sight, a display range (scale) and the like for displaying the map are included.

A map data reading-out unit 120 exerts a function of reading out the map data from the map database 130. A level/mesh setting unit 121 determines what level in the map database 130 and which mesh of the data are to be used in accordance with the position of the point of sight and the like instructed by the user. A cell setting unit 122 determines which cell storing the data in the mesh set by the level/mesh setting unit 121. The map data reading-out unit 120 reads the data for map display from the meshes and the cells set as above.

In this embodiment, in order to display a single sheet of the 3D map, the map data at plural levels are used at the same time. Control of use of the map data at the same time will be described later.

A display control unit 140 displays the 3D map by using the map data of the map database 130.

In this embodiment, the map is divided into two parts, that is, a distant view region far from the position of the point of sight and a near view region near the position of the point of sight, and display is performed by a method described below by using the map data at the different levels.

A display/non-display setting unit 141 determines display/non-display of each feature stored in the map data in accordance with a distance from the position of the point of sight. This processing is processing common to both the distant view region and the near view region.

A distant view drawing unit 142 draws a map of the distant view region. In this embodiment, a bird's eye view by perspective projection from the specified position of the point of sight is drawn. Drawing may be performed with the position of the point of sight being set low. In the three dimensions, a distance from the point of sight of each point in projection, that is, a depth is stored in a depth buffer for so-called hidden line processing. In drawing of the distant view region, too, the depth of each point is stored in the depth buffer.

A depth buffer clear unit 143 initializes a value of the depth buffer stored during drawing of the distant view region. By means of this processing, the drawn distant view region constitutes a single two-dimensional background image without having a three-dimensional meaning.

A near view drawing unit 144 draws a map of the near view region after the depth buffer is initialized. A drawing method of the near view region is performed by using the same point of sight and the same projecting method as those of the distant view region. Moreover, during drawing of the near view, the depth at each point is newly stored in the depth buffer, and the hidden line processing is applied on the basis of this. However, since the distant view region is treated as the mere background image, the near view region is overwritten on the distant view region.

### B. Structure of map database:

Subsequently, a structure of the map database in this embodiment will be described. As described above, in this embodiment, the map data is prepared in the levels with different detail (see Fig. 2), and at each level, the map data is stored by the unit of the mesh constituted by a predetermined geographical size. Moreover, in the mesh, a cell obtained by segmenting the mesh is defined on the basis of the size and a data amount of the feature to be stored, and the data is stored by the unit of the cell. Hereinafter, a concept of the cell is described and then, the structure of the data will be described.

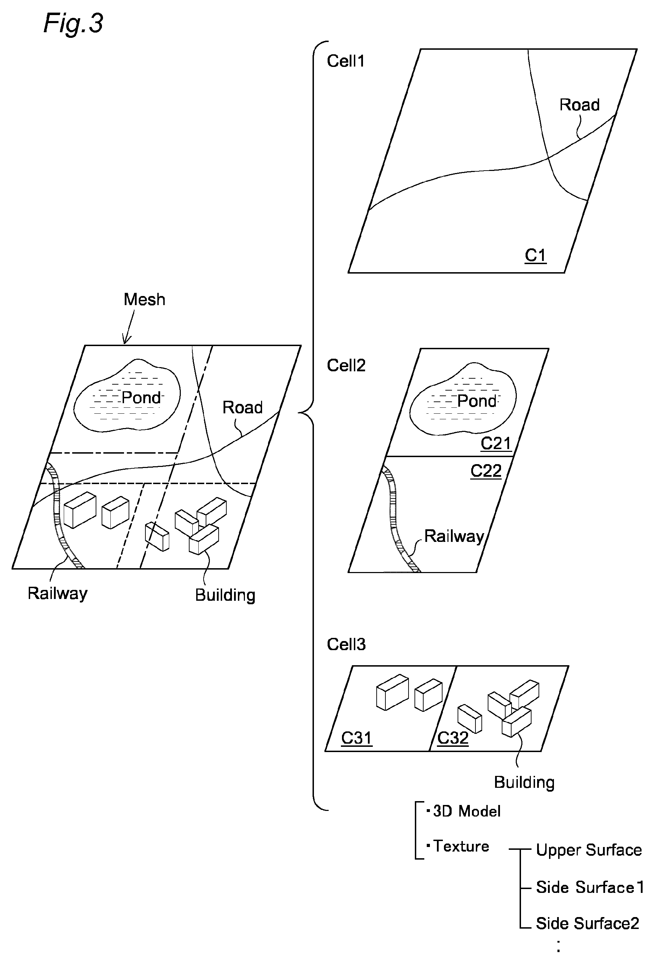

Fig. 3 is an explanatory view illustrating a cell structure of the map database. An example of the mesh constituting the map data is illustrated on the left side.

In the mesh, feature data representing the shapes of various features and the like is stored. In the example in the figure, the feature data of a pond, a road, a railway, and a plurality of buildings is stored. The features have two-dimensional sizes different from each other. For example, the road is a "long" feature present over substantially the whole region in the mesh. A feature having a large tow-dimensional size as this is called a large feature, here. The pond and the railway are the features having a medium size occupying a relatively wide region in the mesh (hereinafter referred to as a "medium feature"). The classification of the large feature and the medium feature is not determined uniquely by an attribute of the feature but can be determined on the basis of an actual size occupied by each feature in the mesh. For example, if a pond larger than that shown in Fig. 2 is present, the pond may be handled as the large feature.

Buildings and the like whose two-dimensional sizes are relatively small other than these large features and the medium features are small features.

In this embodiment, as described above, after the features are classified in accordance with the two-dimensional sizes, a cell to be a unit for managing the features is set.

In the case of the large feature, it is a cell 1 (C1) having the same size as the mesh as illustrated on the right side. In the case of the medium feature, two cells 2 (C21, C22) smaller than the mesh are set. A cell having a size combining the cells C21 and C22 may be used. Whether to divide the cell 2 into the two cells C21 and C22 or not is determined on the basis of whether the data amount included in each cell exceeds an upper limit value set in advance or not. If the total data amount of the feature data of the pond and the railway exceeds the upper limit value set to the cell 2, it is managed after being divided into the cells C21 and C22, while if the amount is contained in the upper limit value or less, the cells C21 and C22 may be combined and managed as a single cell. As described above, the shapes of the cells C21 and C22 and the like are determined on the basis of the size of the feature included in each cell and the data amount of the feature in each cell.

Similarly in the case of the small feature, the feature data of the building is managed by being divided into two cells 3 (C31, C32). The shapes of the cells C31 and C32 are also determined on the basis of the shape of the feature included in each cell and the data amount. In Fig. 3, the cell 3 is not set for each building but the cell C31 stores two buildings and the cell C32 stores four buildings in order to show that the data amount is not larger than the upper limit value of the data amount of each cell even when it stores these plural buildings.

The dashed lines illustrated in the figure on the left side indicate the cell 2, and a broken line indicates the cell 3. As described above, the feature data in the single mesh is managed after being divided into the plurality of cells. In the example in Fig. 3, the features are classified into three types, that is, the large feature, the medium feature, and the small feature, and the cell is set to each of them, but it may be so configured that the features are classified into two types, that is, the large feature and the small feature, and the cell is set only to the small medium.

The cell in this embodiment is not segmentation of the features in the mesh on the basis of simple geographical classification but set to each classification after the features themselves are classified into the large feature, the small feature and the like. Therefore, even if any one of the classifications or only the cell 3 storing the small features is read in, for example, the map cannot be displayed. In order to display an appropriate map, all the cells 1 to 3 need to be read in. However, depending on the display range of the map, the data of the cell C31 is sufficient, and if the data of the cell C32 is out of the display range, reading-in of the cell C32 can be omitted in this embodiment and thus, the processing load of the map display can be reduced.

On the lower right in the figure, contents of the feature data stored in each cell are illustrated. The feature data has a 3D model representing the three-dimensional shape of the feature and the texture given to that. In the case of the exemplified building, the texture is prepared for each polygon such as an upper surface, a side surface or the like. Attribute data indicating the type of the feature or the like may be also added to the feature data.

In this embodiment, the texture of the feature is also given an appearance with contrast. That is, after the feature is arranged in a three-dimensional virtual space, lighting is applied and contrast of each surface is calculated, and the result is reflected in generating the texture. By doing as above, when the map is to be displayed, a three-dimensional feeling of the feature can be given by applying this texture even without lighting.

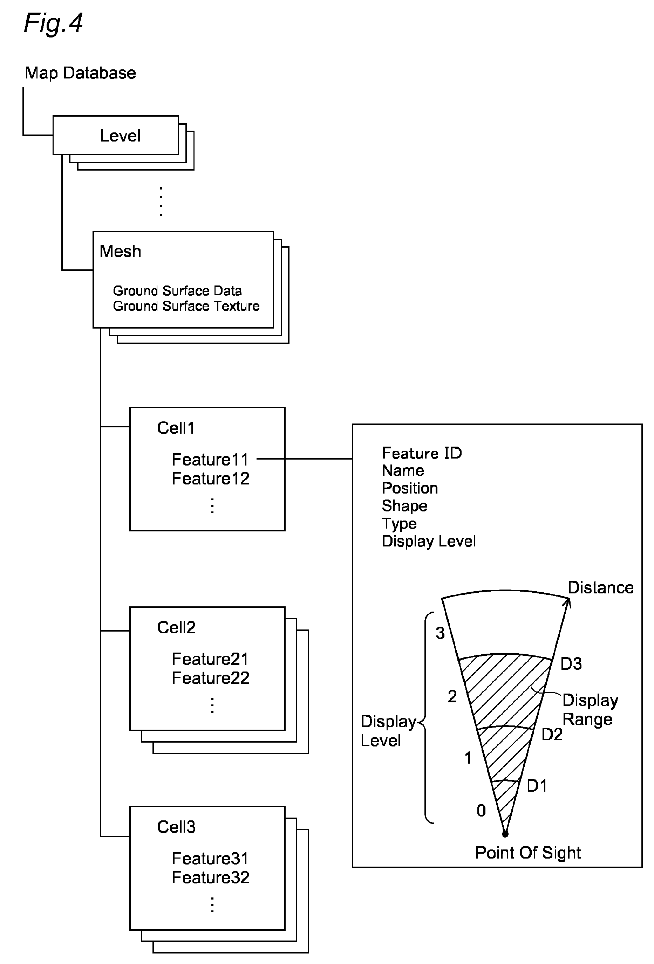

Fig. 4 is an explanatory view illustrating a data structure of the map database. The map database is managed in plural levels as illustrated in Fig. 2.

The data at each level is constituted by a plurality of meshes each having a predetermined geographical size. Then, each mesh is divided into the cell 1 for storing the large feature, the cell 2 for storing the medium feature, and the cell 3 for storing the small feature as illustrated in Fig. 3. The cell 2 may be omitted, or a cell structure of four stages or more may be employed.

Each mesh stores the ground surface data and the ground surface texture as the data common to all the cells. Each cell stores data shown below:
The data structure with respect to each feature is exemplified by using the cell 1 as an example. With respect to each feature, various types of illustrated data are stored.

A "feature ID" is identification information unique to the feature.

A "name" is a name of the feature.

A "position" is a representative point position of the feature. A coordinate value of the center of gravity of the two-dimensional shape can be used, for example.

A "shape" is polygon data representing a two-dimensional or three-dimensional shape of the feature.

A "type" is information indicating a type of the feature such as a road, a building or the like.

A "display level" is information for controlling display/non-display of the feature in accordance with a distance from the point of sight when displaying the map. In this embodiment, the display level is indicated by an integer value of 0 to 3 as illustrated in the figure. The display level "0" indicates that the feature is displayed if it is present within a range of a distance D1 which is relatively close to the point of sight. Similarly, the display level "1" indicates that the feature is displayed when it is within a range from the point of sight to a distance D2, and the display level "2" indicates display if the feature is within a range from the point of sight to a distance D3. Since an upper limit value of the distance is not set to the display level "3", the feature is displayed regardless of the distance from the point of sight.

An example of the display range is indicated by hatching in the figure. If the display level "2" is set to the feature, a range shorter than the distance D3, that is, a range indicated by hatching in the figure is displayed.

### C. Ground surface texture generation processing

Processing for generating the ground surface texture will be described. This is the processing executed in advance by a generating apparatus prepared separately from the 3D map display system 100 illustrated in Fig. 2. The generating apparatus can be configured by installing a computer program that can realize a generation function of the ground surface texture illustrated below in a computer having a processing capacity to such a degree that can calculate lighting. Naturally, such functions may be incorporated in the 3D map display system 100.

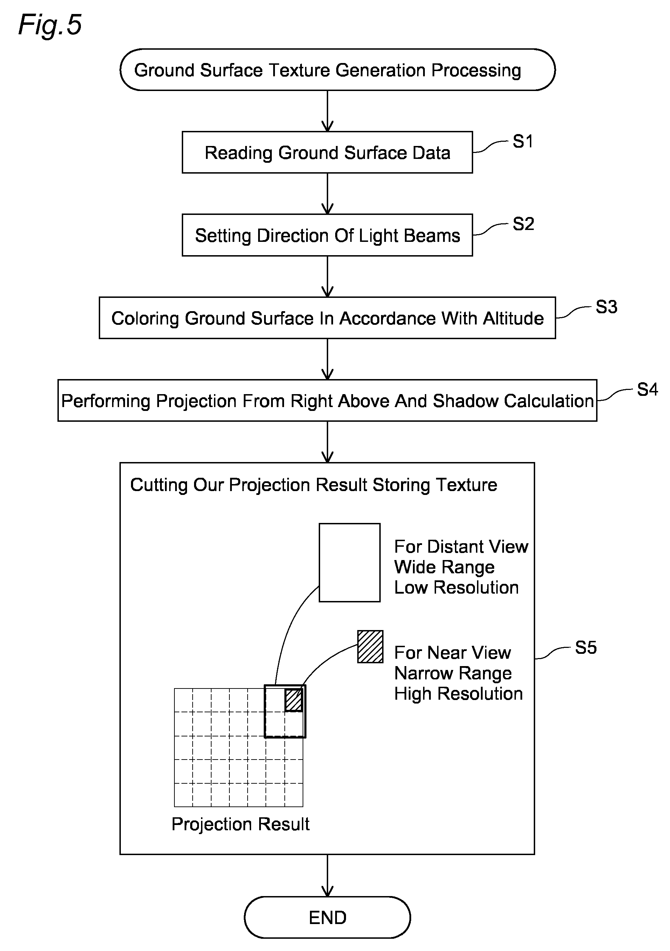

Fig. 5 is a flowchart of the ground surface texture generation processing. The generating apparatus first reads the ground surface data (Step S1). Then, a direction of light beams for applying lighting is set (Step S2). The direction of light beams can be set arbitrarily and does not have to match the direction of the line of sight when displaying the map. The lighting may be from right above or may be diagonal. Moreover, the lighting is not limited to lighting from one spot, but lighting from a plurality of spots may be applied.

In this embodiment, the direction of lighting is set to the same direction as that when the texture is generated for the feature. By such a configuration, contract generated in the feature and the contrast generated on the ground surface can be matched without a sense of discomfort.

Subsequently, the generating apparatus colors the ground surface in accordance with the altitude (Step S2). A coloring method can be also set arbitrarily. In this embodiment, the altitude values are classified into a plurality of sections such as less than 50 meters, 50 meters or more to less than 100 meters, ..., and coloring is set for each section. The coloring is set such that light green is used for a low altitude region and the green is getting darker as the altitude becomes higher, and brown is used for a region with a higher altitude.

Not only to this method, but brightness or intensity of the coloring may be set so as to continuously change depending on a function corresponding to the altitude value.

The generating apparatus performs projection from right above with respect to the ground surface colored as above and carries out shadow calculation using the lighting set at Step S2 (Step S3). In this embodiment, in order to generate a texture with less distortion, parallel projection from right above is used. As a projecting method, a perspective projection may be used, and a projecting direction can be set also arbitrarily.

The generating apparatus generates a texture by cutting out an obtained projection result and stores it (Step S4). A state of storing is schematically illustrated in the figure. As illustrated, an image is cut out from a projection result of a wide range, and this is stored as the ground surface texture. In this embodiment, two types of the ground surface textures, that is, the texture for a near view and the texture for a distant view are prepared. The texture for a near view is a texture representing a relatively narrow range at a high resolution. The texture for a distant view is a texture representing a wide range at a low resolution. In the example in the figure, the ground texture for a distant view is wider than the texture for a near view by four times (homothetic ratio: 2) but this relation is not limiting. The homothetic ratio between the texture for a distant view and the texture for a near view can be set by an arbitrary real number.

Since the ground surface texture is stored in correspondence with each mesh according to the map level (see Fig. 4), it is efficient if the texture cut out at the aforementioned Step S4 has the same size as the mesh of the map, but the same size is not necessarily limiting. For example, the texture for a distant view can be applied to a mesh smaller than that or a plurality of textures for near views can be juxtaposed and applied to a wide mesh.

### D. Map display processing:

Processing for displaying a map will be described. This is processing executed mainly by a display control unit 140 illustrated in Fig. 2 and is processing executed by the CPU of the map display system 100 in view of hardware.

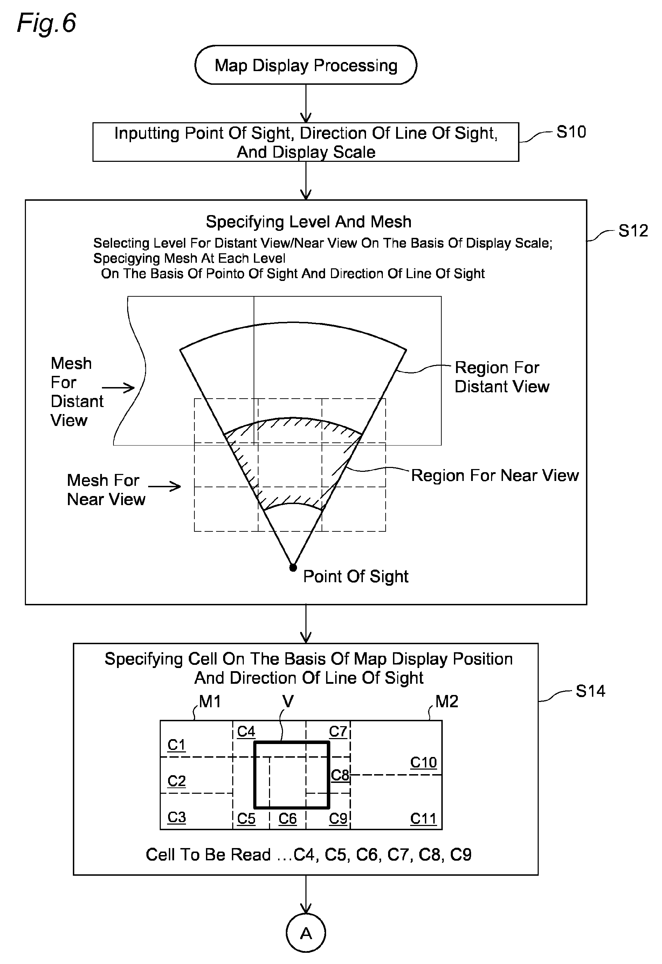

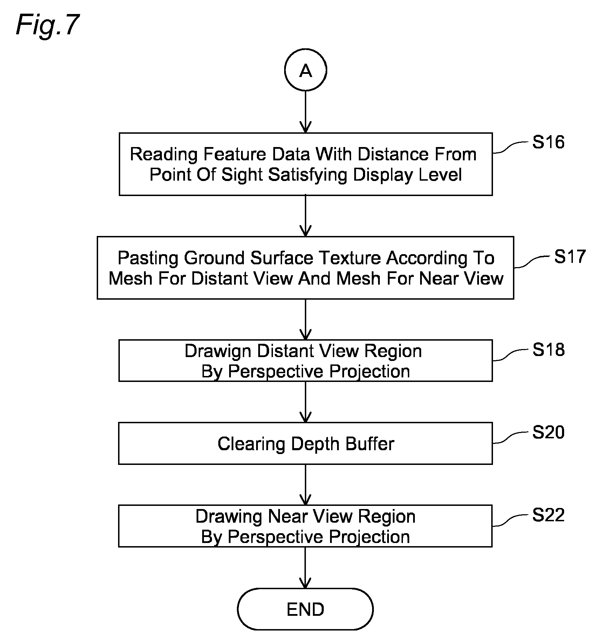

Figs. 6 and 7 are flowcharts of the map display processing.

When the processing is started, the CPU of the map display system 100 receives inputs of instructions of the point of sight, the direction of the line of sight, and a display scale from the user (Step S10). These instructions may use default values.

Then, the CPU specifies the level and the mesh for which the map data is to be read (Step S12). A method of specifying the mesh is exemplified in the figure.

In this embodiment, the map is displayed by using two map data with different levels at the same time in the two regions, that is, a distant view region and a near view region. The CPU first specifies the level of each of the distant view region and the near view region on the basis of the display scale specified by the user. For example, if wide-area display is specified as the display scale, the level LVa illustrated in Fig. 1 is selected for a distant view and the LVb for a near view. On the other hand, if detailed display is specified, the level LVb illustrated in Fig. 2 is selected for a distant view, and the LVc for a near view.

When the level is selected, the CPU specifies the mesh to be read for the map data at each level on the basis of the point of sight and the direction of the line of sight. A method of specifying the mesh is exemplified in the figure. A fan-shaped range around the point of sight is a display range of the map. In this, a hatched range relatively closer to the point of sight is a near view region and an outlined range far from that is a distant view region.

In the map data at the level selected for a near view, the mesh overlapped with the near view region, that is, nine meshes indicated by a broken line in the figure are reading targets in the map data for a near view. Similarly for a distant view, the mesh overlapped with the distant view region, that is, two meshes indicated by a solid line in the figure are reading targets in the map data for a distant view.

As will be described later, in this embodiment, a map image of the near view region is overwritten on a map image drawn for the distant view region. Therefore, regarding the distant view region, a reading range of the map data is not necessarily limited to the distant view region. For example, a range including both a near view region and a distant view region may be read from near the point of sight so as to draw an image for a distant view by using them as a whole.

Subsequently, the CPU specifies a cell for which the map data is to be read on the basis of the map display position and the direction of the line of sight (Step S14). A method of specifying the cell is exemplified in the map.

It is assumed that, by means of the processing at Step S12, meshes M1 and M2 are specified as reading targets. For the mesh M1, cells C1 to C6 are defined as indicated by the broken line in the figure. For the mesh M2, cells C7 to C11 are defined. The CPU specifies a cell overlapped with a display range V of the map (though displayed as a rectangle in the figure, strictly speaking, it is a fan shape as a region of perspective projection) as a reading target from the cells C1 to C11 included in these meshes M1 and M2. As a result, in the example in the figure, the cells C4 to C9 are reading targets.

By specifying the reading target by the unit of cell as above, it is no longer necessary to read the map data of the entire meshes M1 and M2, and thus, time required for reading of the map data can be reduced.

The CPU reads the feature data with a distance from the point of sight satisfying the display level from the specified cell (Step S16). For example, as illustrated in Fig. 4, since the display level "2" means display within the distance D3 from the point of sight, if this feature is present farther than the distance D3 from the point of sight, it is excluded from the reading target. A distance from the point of sight to the feature used for this determination may be calculated individually for each feature or may be calculated by using a representative point of the cell (a point closest to the point of sight on a border of the cells, for example).

Instead of the aforementioned processing, after the feature data is read once, display/non-display may be controlled on the basis of the display level.

Subsequently, the CPU pastes the ground surface texture according to the mesh for a distant view and the mesh for a near view (Step S17). As described above in Fig. 5, in this embodiment, the ground surface texture with a low resolution for a distant view and the ground surface texture with high resolution for a near view are prepared. Thus, they are used separately such that the ground surface texture for a near view is pasted to the near view region and the ground surface texture for a distant view to the distant view region, respectively. Instead of using them separately as above, either one of the texture for a near view or the texture for a distant view may be uniformly used for all the regions.

When the aforementioned processing is finished, the CPU draws the distant view region by perspective projection (Step S18). In this embodiment, a bird's eye view is drawn from a high point of sight, but a driver's view may be drawn from a low point of sight. The map data used in this processing is the map data at a level for a distant view.

In the processing at Step S18, depth at each point is stored in the depth buffer, and the hidden line processing is performed.

When the distant view region is to be drawn, control is executed such that a three-dimensional feature is not drawn in the vicinity of a border with the near view region. Such processing can be realized by setting a non-display region in which a feature is not displayed in the vicinity of the border with the near view region and determining whether or not each feature belongs to this non-display region. Instead of such processing, only a polygon of the ground surface may be drawn without drawing any feature in the distant view region.

When drawing of the distant view region is completed, the CPU clears the depth buffer (Step S20). As a result, an image of the distant view region (hereinafter referred to as a "distant view image" becomes an image representing only a two-dimensional background image without any depth information.

Subsequently, the CPU draws a near view region by perspective projection (Step S22). The point of sight and the direction of the line of sight of the perspective projection are the same as those of the drawing of the distant view region (Step S18). Those used at Step S22 are the map data at the level for a near view.

Since the depth buffer has been cleared, the image for a near view (hereinafter referred to as a "near view image") is overwritten on a front surface of the distant view image. However, since the depth is newly stored in the depth buffer in perspective projection of the image for a near view, the hidden line processing is properly applied to the image for a near view.

Here, meaning of the non-display region set when the distant view region is drawn will be described.

In this embodiment, by clearing the depth buffer, the near view image is overwritten on the distant view image as described above. Therefore, if a three-dimensional feature is drawn in the vicinity of a border between the distant view image and the near view image, there is a concern that a part thereof is unnaturally hidden by the near view image. As described above, by providing a non-display region in the vicinity of a border in the distant view image so as to prevent a three-dimensional feature from being drawn in the vicinity of the border, such nonconformity can be avoided. A size of the non-display region can be arbitrarily set so that the aforementioned object can be achieved on the basis of a range overwritten by the near view region.

### E. Display example and effect of 3D map:

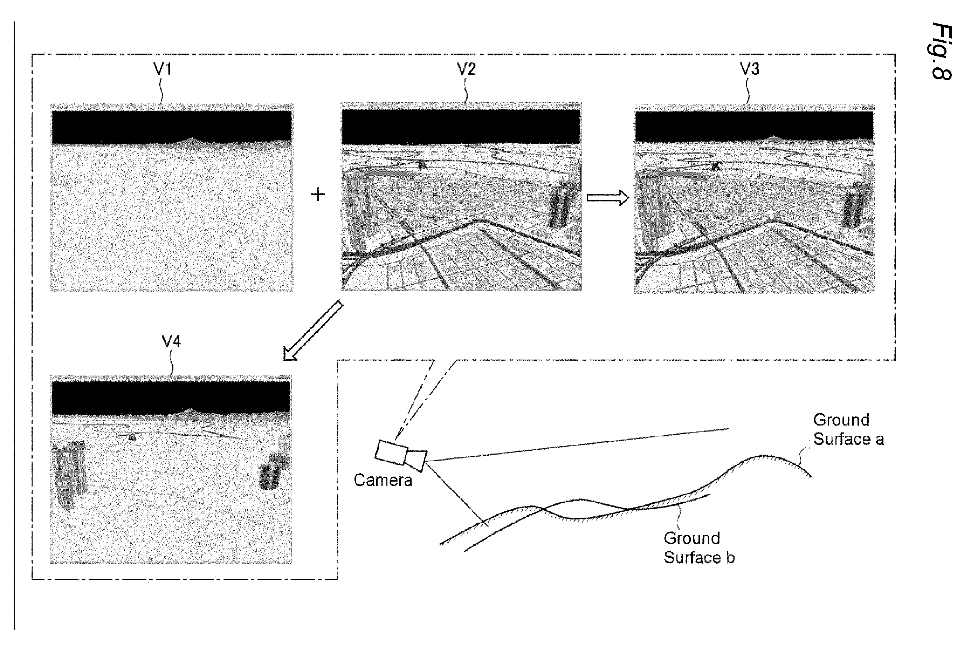

Fig. 8 is an explanatory view illustrating an effect of the depth buffer clear.

A display V1 illustrates an example of a distant view image. Here, an example in which the entirety from the vicinity of the point of sight including the near view region to a distant place is drawn as a distant view region is illustrated. In this example, only the ground surface is mainly drawn in the distant view image, but the feature may be drawn.

A display V2 illustrates an example of a near view image. A distant view image is not drawn. The image drawn here is, as illustrated at Step S12 in Fig. 6, a perspective projection view within a distance range set as a near view region from the point of sight. In the near view region, a road and the like are drawn as a bird's eye view, and major features are drawn three-dimensionally.

A display V3 illustrates a state in which a near view image is superposed on a distant view image. This is a 3D map realized in this embodiment. In a distant place, a mountain and the like as the distant view image is displayed, while the road, a building and the like are drawn on a side close to the point of sight.

A display V4 is illustrated as a comparative example and is an example when a distant view image is drawn and then, a near view image is drawn without clearing the depth buffer. A road and the like which should have been drawn in the near view image are scarcely drawn, and it is known that three-dimensional features are unnaturally present in the image.

A view on the lower right is an explanatory view indicating an influence of the depth buffer. A ground surface a indicates a ground surface of a distant view region, and a ground surface b indicates a ground surface of a near view region. Since the map data for a distant view and the map data for a near view include errors, respectively, if the both are overlapped, a ground surface height might be different depending on a spot. If a near view region is drawn without clearing the depth buffer after a distant view region is drawn, the hidden line processing is performed also between the distant view image and the near view image. As a result, in a portion where the ground surface of the distant view region is at a spot higher than the ground surface of the near view region on the map data, the near view image is hidden by the ground surface of the distant view image, and an unnatural image illustrated in the display V4 is obtained.

The influence of the depth buffer is not limited to a case in which there is discrepancy between pieces of the map data at different levels as above. Even if the both are perfectly matched, discrepancy might occur in the height of the ground surface as illustrated in the view on the lower right as the result of the influence of a rounding error during a display processing process. Moreover, if the heights of the ground surfaces perfectly match between the map data at different levels, a plurality of polygons are present at spots with the same depth this time, which makes it difficult for a graphics engine to determine what should be drawn in such a way that can be visually recognized, and a phenomenon that the image itself flickers unstably occurs.

According to the 3D map display system of this embodiment, such trouble can be avoided by clearing the depth buffer after the distant view image is drawn, and even if the map data at plural levels are used at the same time, a 3D map with good appearance can be displayed. Moreover, by using the map data at the plural levels at the same time, it is no longer necessary to read detailed map data for the distant view region and thus, a map can be drawn efficiently by using the map data with a low data amount for a distant view region while sufficiently detailed information is provided for a near view region.

Moreover, in this embodiment, not only that the map data is stored by the unit of mesh but it is stored, capable of being read out by the unit of cell obtained by segmenting the mesh. By such a configuration, data reading unnecessary to map display can be avoided, and time required for reading out data at map display can be reduced.

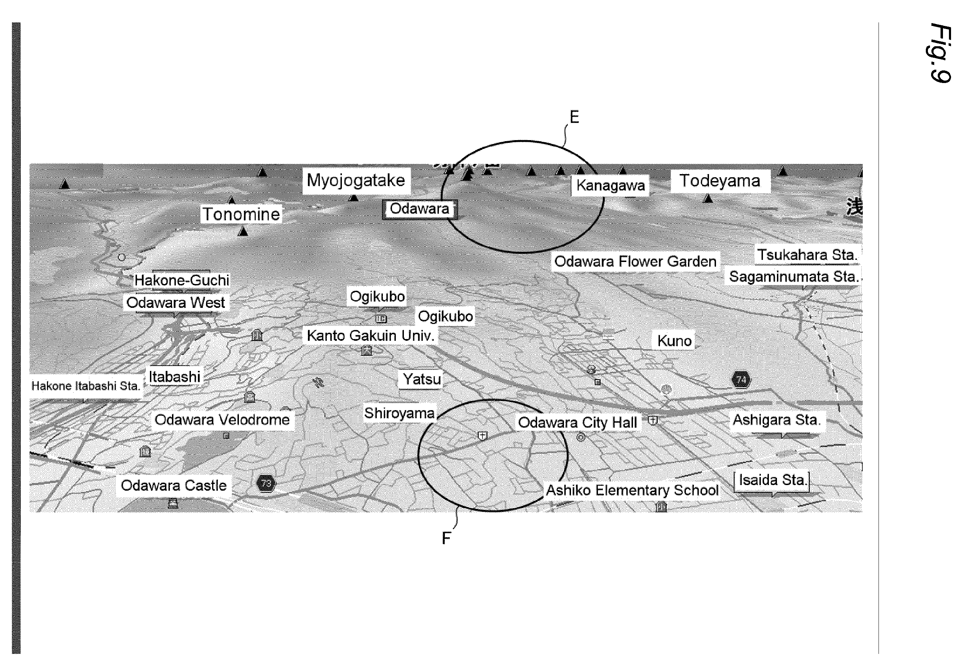

Fig. 9 is an explanatory view illustrating a display example of a 3D map. As illustrated in a region E, contrast is represented by using the ground surface texture, and a three-dimensional feeling can be felt. Contrast is not represented in a region F close to the point of sight since the region F is a relatively flat urban area when seen with this display scale.

Moreover, in this embodiment, the distant view region is also drawn by projecting the ground surface data, and the distant view image is not displayed by drawing a background image prepared in advance. Therefore, the region E is a loyal view reproduced on the basis of the ground surface data. By using the ground surface data as above, as the position of the point of sight and the direction of the line of sight change, a loyal distant view image changing in accordance with that can be provided.

According to the 3D map display system of this embodiment, by using the ground surface texture generated by applying lighting in advance, a map from which contrast of the ground surface can be felt can be provided while a processing load required in display of a map is reduced. As a result, even a distant view can be drawn by using the ground surface data, and a loyal and natural distant view image can be provided.

The embodiment of the present invention has been described above.

The 3D map display system of the present invention does not necessarily have to include all the functions of the aforementioned embodiment but may realize only a part of them. Moreover, an additional function may be provided in the aforementioned contents.

The present invention is not limited to the aforementioned embodiment but naturally it can take various configurations within a range not departing from the gist thereof. For example, a portion configured in a hardware manner in the embodiment can be configured in a software manner or vice versa.

### [Industrial Applicability]

The present invention can be used for representing undulation with a light processing load by using the three-dimensional ground surface data.

### [Reference Numerals]

- 100: 3D Map Display System
- 110: Command Input Unit
- 120: Map Data Reading-out Unit
- 121: Level/Mesh Setting Unit
- 122: Cell Setting Unit
- 130: Map Database
- 132: Ground Surface Data
- 133: Ground Surface Texture
- 134: Feature Data
- 140: Display Control Unit
- 141: Display/Non-display Setting Unit
- 142: Distant View Drawing Unit
- 143: Depth Buffer Clear Unit
- 144: Near View Drawing Unit

## Claims

1. A 3D map display system for displaying a 3D map, comprising:
a map database storing ground surface data representing a three-dimensional shape of a ground surface and a ground surface texture generated on the basis of a projection view in which predetermined lighting is applied to the ground surface data; and
a display control unit for displaying the 3D map by performing projection by applying the ground surface texture to the ground surface data.

2. The 3D map display system according to claim 1, wherein
the ground surface texture is generated on the basis of the projection view in which predetermined coloring is applied to the ground surface in accordance with an altitude value thereof.

3. The 3D map display system according to claim 1 or 2,
wherein the display control unit displays a distant view by projection of the ground surface data without standing a polygon to which a background image drawing a distant view including the ground surface is pasted on the ground surface.

4. The 3D map display system according to any one of claims 1 to 3, wherein
the display control unit reduces resolution of the ground surface texture more in a region far from the a point of sight of the projection than in a region close thereto.

5. The 3D map display system according to any one of claims 1 to 4, wherein
the map database further stores a 3D model representing a three-dimensional shape of a feature and a texture representing an appearance of the feature to which predetermined lighting is applied in advance; and
the display control unit further performs projection by applying the texture to the 3D model.

6. A 3D map display method for displaying a 3D map by a computer, comprising, as steps executed by the computer:
a step of reading out, from a map database storing ground surface data representing a three-dimensional shape of a ground surface and a ground surface texture generated on the basis of a projection view in which predetermined lighting is applied to the ground surface data, the ground surface data and the ground surface texture; and
a step of displaying the 3D map by performing projection by applying the ground surface texture to the ground surface data.

7. A computer program for displaying a 3D map by a computer, causing a computer to realize:
a function of reading out, from a map database storing ground surface data representing a three-dimensional shape of a ground surface and a ground surface texture generated on the basis of a projection view in which predetermined lighting is applied to the ground surface data, the ground surface data and the ground surface texture; and
a function of displaying the 3D map by performing projection by applying the ground surface texture to the ground surface data.
